# EUROPÄISCHE PATENTSCHRIFT

(11) **EP 0 405 423 B1**
(45) Veröffentlichungstag und Bekanntmachung des Hinweises auf die Patenterteilung: **14.09.1994**
(21) Anmeldenummer: 90112084.0
(22) Anmeldetag: 26.06.1990
(51) Int. Cl.: G01B 11/00, G01B 11/26

(54) **Verfahren und Vorrichtung zur Lagebestimmung eines Objektes**
Method and device to determine the position of an object
Méthode et dispositif pour déterminer la position d'un objet

(30) Priorität: 30.06.1989 DE 3921661
(43) Veröffentlichungstag der Anmeldung: 02.01.1991
(73) Patentinhaber: FRAUNHOFER-GESELLSCHAFT ZUR FÖRDERUNG DER ANGEWANDTEN FORSCHUNG E.V., 80636 München (DE)
(72) Erfinder: Hartrumpf, Matthias, Dipl.-Phys., D-7500 Karlsruhe 21 (DE)

(56) Entgegenhaltungen:
- DE-A- 3 400 151
- FHG-BERICHTE, Nr. 3-88, Seiten 30-33; M. BIRKLE et al.: "Genauigkeitsgrenzen eines Lasertriangulationssystems zur externen Vermessung von Robotern"

## Beschreibung

Die Erfindung bezieht sich auf ein Verfahren und eine Vorrichtung zur Lagebestimmung eines insbesondere bewegten Objektes.

Die Bestimmung des Ortes eines Objektes nach dem Triangulationsverfahren ist beispielsweise aus der Geodäsie allgemein bekannt. Nur beispielhaft wird auf den Artikel in FhG-Berichte 3 - 88, Seiten 30 - 33, verwiesen, auf den im übrigen zur Erläuterung aller hier nicht näher beschriebenen Begriffe ausdrücklich Bezug genommen wird.

Aus diesem Artikel ist ein auf der Grundlage des bekannten Triangulationsverfahren arbeitendes Verfahren zur Ortsbestimmung eines Objektes bekannt, bei dem ein Punkt des Objektes von zwei an unterschiedlichen Orten befindlichen Meßköpfen mit jeweils einem Laserstrahl automatisch angepeilt wird. Die von jedem Meßkopf ausgehenden Laserstrahlen treffen auf einen am Meßobjekt befestigten speziellen Retroreflektor und werden von diesem parallel zur Einfallsrichtung reflektiert. Sofern der Laserstrahl nicht im Zentrum des Retroreflektors auftrifft, wird er parallel zum einfallenden Strahl versetzt. Dieser Parallelversatz der reflektierten Strahlen wird in den beiden Meßköpfen mit positionsempfindlichen Dioden (sog. Posicons) erfaßt. Die Ausgangssignale der Posicons sind als Eingangssignale an eine digitale Nachführregelung angelegt, die die Strahlorientierungen über motorgetriebene Drehspiegel so nachstellt, daß die Laserstrahlen das Zentrum des Retroreflektors "treffen". Durch laufende Messung der räumlichen Strahlwinkel wird dann mit Triangulationsrechnungen der Schnittpunkt beider Strahlen - d.h. die Position des Zentrums des Retroreflektors - bestimmt. Hierzu müssen die Positionen der beiden Meßköpfe (d.h. der Strahldrehpunkte) genau bekannt sein. Diese werden beim Aufstellen des Gesamtsystems in einem Referenzierlauf halbautomatisch bestimmt. Auf diese Weise erfolgt eine genaue, berührungs- und rückwirkungsfreie externe Lagemessung des bewegten Objekts.

Nach diesem Verfahren kann die Translation des Objektes bzw. des Objektkoordinatensystems x′, y′, z′ gegenüber dem externen Koordinatensystem x, y, z der fest installierten Meßköpfe ermittelt werden.

Dieses bekannte Verfahren zur Ortsbestimmung eines Objekts kann beispielsweise dazu verwendet werden, den Ort einer Roboterhand, d.h. die kartesischen Koordinaten des angepeilten Punktes im Raum "on-line" zu ermitteln. Durch dieses unabhängige externe Meßsystem können beispielsweise Roboter oder präzise Handhabungs- und Bearbeitungsmaschinen, bei denen die übliche indirekte Lagemessung über die Positionen der einzelnen Achsantriebe durch Elastizitäten, Spiel etc. in den Antriebselementen verfälscht wird, exakt vermessen und geregelt werden.

Das aus FhG-Berichte 3 - 88, Seiten 30 - 33 bekannte Verfahren bzw. die entsprechende Vorrichtung erlaubt zwar die sehr präzise Bestimmung der Koordinaten eines Punktes eines insbesondere bewegten Objektes relativ zum Ort der beiden Meßköpfe, es ist jedoch nicht möglich, eine Rotation des Objektes um das Zentrum des Retroreflektors zu erfassen.

Es ist Aufgabe der Erfindung, ein Verfahren und eine Vorrichtung anzugeben, das neben der Bestimmung des Ortes eines insbesondere bewegten Objektes auch die Erfassung einer Rotation des Objektes ermöglicht.

Ein erfindungsgemäßes Verfahren und eine erfindungsgemäße Vorrichtung, die diese Aufgabe lösen, sind in den Ansprüchen 1 und 2 angegeben. Weiterbildungen der Erfindung sind Gegenstand der Unteransprüche.

Erfindungsgemäß wird ein teilverspiegelter Retroreflektor verwendet. Durch die Teilverspiegelung des Retroreflektors wird bewirkt, daß die von den beiden Meßköpfen ausgehenden Strahlen zum einen parallel zu sich selbst reflektiert werden und damit mittels Triangulations die Position des Objektes bestimmt werden kann. Zum anderen durchdringen die beiden Strahlen den Retroreflektor und werden in der Sensorebene detektiert. Damit ist über den Auftreffpunkt in der Sensorebene bei bekanntem Abstand der Sensorebene von dem Zentrum des Retroreflektors die Bestimmung der Drehlage des Empfängersystems möglich.

Durch die erfindungsgemäße Ausgestaltung wird damit erreicht, daß alle sechs Freiheitsgrade des Empfängersystems, d.h. des Retroreflektors und des zugeordneten ortsempfindlichen Sensors in dem dem Empfängersystem zugeordneten Koordinatensystem x′, y′, z ermittelt werden können. Da das Empfängersystem im bzw. am zu vermessenden Objekt fixiert ist, ist auch das zu vermessende Objekt mit seiner Position und Drehlage genau definiert.

Eine besonders vorteilhafte Weiterbildung ist im Anspruch 2 angegeben: Die Reflexionseigenschaften des Retroreflektors erlauben die Erfassung von Lagedifferenzen mit Hilfe der positionsempfindlichen Sensoren, so daß die Licht- und insbesondere die Laserstrahlen mit einer Nachführregelung immer dem Nullpunkt, d.h. dem Zentrum des Retroreflektors nachgeführt werden können. Durch diese Ausbildung ist in einfacher Weise zusätzlich zur Orts-Erfassung eine Lage-Erfassung möglich.

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird. Es zeigen:
- Fig. 1: den Teil der Vorrichtung, der mittels Triangulation die Bestimmung des Ortes eines Objektes ermöglicht, und
- Fig. 2: eine vereinfachte Darstellung des Teils der Vorrichtung, der die Bestimmung der Drehlage ermöglicht.

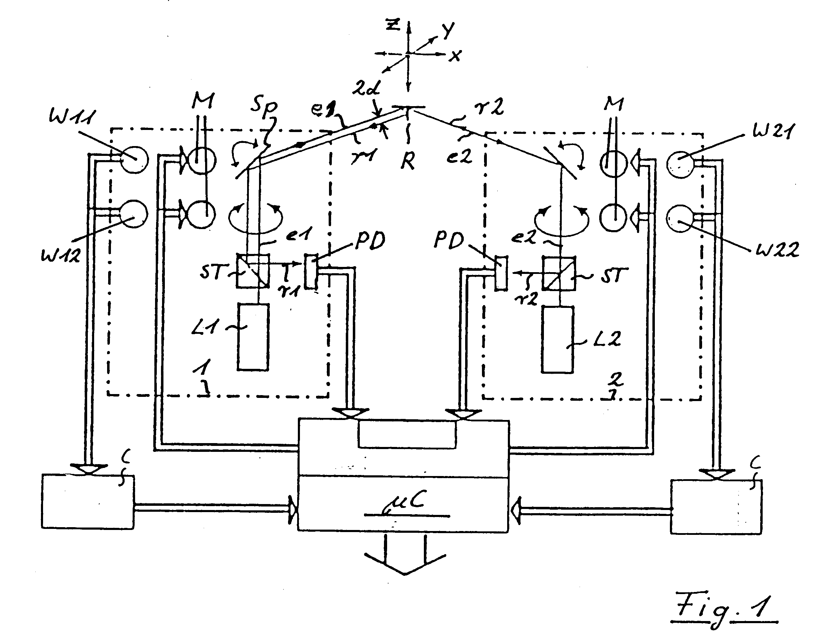

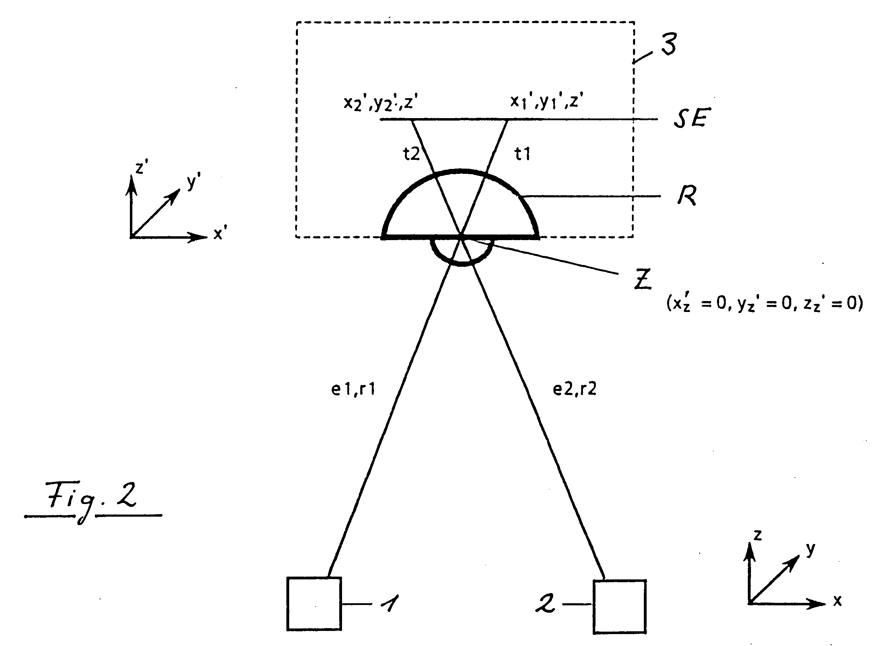

In Fig. 1 ist der Teil einer erfindungsgemäßen Vorrichtung dargestellt, der insbesondere die Bestimmung des Ortes eines Objektes erlaubt. An dem nicht näher dargestellten Objekt ist ein Retroreflektor R angebracht, der einen im Abstand d vom Zentrum Z (s. Fig. 2) des Retroreflektors R einfallenden Strahl um den Weg 2d parallel versetzt reflektiert. Dieser Parallelversatz des reflektierten Strahles ist unabhängig vom Einfallswinkel des auftreffenden Strahls.

Die erfindungsgemäße Vorrichtung weist zwei Meßköpfe 1 und 2 auf, die an unterschiedlichen Stellen angeordnet sind und jeweils über einen Laser L1 bzw. L2, beispielsweise einen HeNe-Laser verfügen. Jeder Laserstrahl e1 bzw. e2 (s.a. Fig. 2) durchsetzt einen - im Beleuchtungsstrahlengang funktionslosen - Strahlteilerwürfel ST und wird von einem beweglichen Oberflächenspiegel Sp auf den Retroreflektor R reflektiert. Jeder am Retroreflektor R reflektierte Strahl r1 bzw. r2 (s.a. Fig. 2) wird am Spiegel Sp reflektiert und durch den Strahlteilerwürfel ST auf einen Ortsempfindlichen Sensor PD gelenkt. Bei Dauerstrichlasern werden als Sensoren vorteilhaft eine CCD- oder PSD-Matrix und bei gepulsten Lasern eine positionsempfindliche Photodiode (auch als Posicon bzw. Position sensitive device bezeichnet) verwendet.

Jeder Spiegel Sp ist um eine Drehachse drehbar, die mit dem jeweiligen Laserstrahl e1 bzw e2 zusammenfällt, und um eine Schwenkachse schwenkbar, die auf der Drehachse senkrecht steht und diese im Auftreffpunkt des Laserstrahls auf dem Spiegel Sp schneidet. Die Laser L1 und L2 werden hierzu im jeweiligen Meßkopf so justiert, daß ihr Strahl genau in der jeweiligen Drehachse liegt und im Schnittpunkt beider Achsen auf die Spiegeloberfläche trifft. Zusammen mit dem Spiegel Sp drehen sich der Strahlteilerwürfel ST und der Sensor PD um die Drehachse.

Beide Laserstrahlen werden mit einer entsprechenden - nicht näher dargestellten - Optik über den gesamten Strahlweg (inklusive Strahlteiler und Retroreflektor) auf den zugehörigen Sensor PD fokussiert, um den Lichtfleck dort möglichst klein zu halten.

Zur Bewegung der Spiegel Sp um die einzelnen Achsen sind Motoren M vorgesehen, die von dem Nachführregelungs-Teil einer pauschal mit dem Bezugszeichen µC bezeichneten Steuer- und Auswerteeinheit gesteuert werden, deren Funktion im folgenden noch erläutert werden wird.

Die Drehung der Spiegel Sp um die einzelnen Achsen wird mit inkrementalen Winkelcodierern WK11.....WK22 erfaßt, die auf den jeweiligen Achsen angeordnet sind, und deren Ausgangssignale über je einen Zähler C an einem Auswerteteil der Steuer- und Auswerteeinheit µC anliegen.

Fig. 2 zeigt schematisch die beiden Meßköpfe 1 und 2, von denen die (Laser)-Strahlen e1 und e2 ausgehen, die im Zentrum Z des Retroreflektors R zusammentreffen, der an einem Objekt 3 angebracht ist, dessen Lage bestimmt werden soll. Ferner ist in Fig. 2 das externe Koordinatensystem x,y,z, das "fest mit den beiden Meßköpfen 1 und 2 verbunden ist" und das fest mit dem zu erfassenden Objekt verbundene Koordinatensystem x′,y′,z′ eingezeichnet, dessen Nullpunkt im Zentrum Z des Retroreflektors R liegt.

Da der Retroreflektor R teilverspiegelt ist, wird nur ein Teil r1 und r2 der einfallenden Lichtstrahlen reflektiert, während der andere Teil t1 und t2 den teilverspiegelten Retroreflektor durchstößt. In einem Abstand z′ "hinter" dem Zentrum Z des Retroreflektors sind ortsempfindliche Sensoren SE angeordnet, die den Schnittpunkt der durch den Retro-reflektor durchgehenden Strahlen t1 und t2 mit der Sensorebene, d.h. die Koordinaten x′₁, y′₁, z′ und x′₂, y′₂, z′ ermitteln. Die Ausgangssignale der Sensoren SE sind ebenfalls an die Steuer- und Auswerteeinheit µC angelegt.

Bei Verwendung von sog. Posicons werden zur eindeutigen Trennung der beiden Strahlauftreffpunkte bevorzugt zwei Posicons eingesetzt, denen gegebenenfalls Optikelemente, wie Linsen, Strahlteiler etc. vorgeschaltet sein können. Selbstverständlich ist es aber auch möglich, eine CCD-Einheit mit entsprechender Ausleseelektronik, die eine Trennung der beiden Strahlauftreffpunkte erlaubt, zu verwenden.

Im folgenden soll unter Bezugnahme auf Fig. 1 zunächst die Bestimmung des Objekt-Ortes, d.h. die Bestimmung der kartesischen Koordinaten eines Punktes an dem Objekt, und anschließend unter Bezugnahme auf Fig. 2 die Bestimmung der Objekt-Lage erläutert werden:
Die von jedem Meßkopf 1 bzw. 2 ausgehenden Laserstrahlen e1 bzw. e2 fallen auf den an dem Objekt, dessen Lage bestimmt werden soll, befestigten Retroreflektor R und werden von diesem parallel zu sich reflektiert. Abweichungen der am Retroreflektor auftreffenden Strahlen von dessen Zentrum (Z in Fig. 2) führen zu einer Parallelversatz der reflektierten Strahlen, der von den ortsempfindlichen Sensoren PD detektiert werden. Die Ausgangssignale der Sensoren PD liegen als Eingangssignale an der Nachführregelungs-Teil der Steuer-und Auswerteeinheit µC an, die beispielsweise ein handelsüblicher Computer mit zugeordneten Peripherie- bzw. Interface-Karten sein kann. Die Einheit µC stellt die Strahlorientierungen über die motorgetriebenen Drehspiegel Sp so nach, daß immer das Zentrum Z des Retroreflektors R angepeilt wird.

Aus den von den Winkelcodierern WK11,...,WK22 laufend gemessenen räumlichen Strahlwinkeln berechnet der Auswerteteil der Einheit µC mittels einer Triangulationsrechnung den Schnittpunkt beider Strahlen - d.h. die Position des Retroreflektors R. Hierzu müssen die Positionen der beiden Meßköpfe (d.h. der Strahldrehpunkte) genau bekannt sein. Diese werden beim Aufstellen des Gesamtsystems in einem Referenzierlauf halbautomatisch bestimmt.

Aus den Ausgangssignalen des bzw. der Sensoren SE und der einmal zu vermessenden Position des Retroreflektorzentrums Z relativ zur Sensorebene erfolgt eine Berechnung der Strahlengänge im Empfänger-Koordinatensystem x′,y′,z′, das durch die Sensorebene SE und das Zentrum Z des Retroreflektors R festgelegt wird. Da die Strahlverläufe und die Position des Zentrums Z des Retroreflektors R im externen Roordinatensystem x,y,z - wie vorstehend beschrieben - durch Triangulation ermittelt wird - kann deshalb die Translation und Rotation des Empfänger-Koordinatensystems x′,y′,z′ gegenüber dem externen Koordinatensystem x,y,z bestimmt werden.

Hierzu wird ein einfacher Algorithmus verwendet, der aus der folgenden Überlegung abgeleitet wird: Werden bei unveränderter Position des Zentrums Z des Retroreflektors R Drehungen des Objektes 3 um die z′-Richtung durchgeführt, so bewirkt dies eine Kreisbewegung der Schnittpunkte der Strahlen t1, t2 mit der Sensorebene SE. Drehungen des objektes 3 um die x′-Achse führen dagegen zu Verschiebungen der Schnittpunkte in y′ -Richtung bei nahezu konstanten x′-Positionen. Entsprechend führen Drehungen des Objektes 3 um die y′-Achse zu Verschiebungen der Schnittpunkte in x′-Richtung bei nahezu konstanten y′-Positionen.

Während mittels eines herkömmlichen Lasertriangulationssystems nur die Translation beider Koordinatensysteme gegeneinander vermessen werden kann, kann so eine zusätzliche Vermessung der Drehung des Empfänger-Koordinatensystems gegen das externe Koordinatensystem erfolgen. Nach einmaliger Eichung des Systems (Ermittlung der Koordinatentransformation zwischen einem vorgebbaren äußeren Koordinatensystem x,y,z und den Meßkopf-Koordinatensystemen) kann so eine externe Vermessung der Lage und Orientierung des Meßobjektes erfolgen.

Im folgenden soll noch kurz der Aufbau der nicht näher beschriebenen Steuer- und Auswerteeinheit erläutert werden:
Die Steuer- und Auswerteeinheit wandelt (beispielsweise) in einer Posicon-Elektronik die Differenzströme der ortsempfindlichen Posicondioden in Spannungen um, die der Verschiebung des Lichtflecks auf der aktiven Fläche des Sensors proportional sind. Durch Normierung mit einem -der auffallenden Gesamtintensität proportionalen -Summensignal werden die Ausgangssignale in weiten Grenzen unabhängig von der Lichtintensität. Zusätzlich wird von jedem Sensor das Summensignal erfaßt, um zu entscheiden, ob der reflektierte Strahl überhaupt den Sensor trifft, d.h. die Nachführregelung arbeiten kann.

Nach einer Analog/Digital-Wandlung berechnet ein Regelprozessor mit üblicher Peripherie aus den Ausgangssignalen der Sensoren PD die Sollgrößen für die Motorsteuerungen und bereitet diese zur Steuerung der Motoren, die beispielsweise Gleichstrommotoren sein können, auf und legt entsprechende Steuergrößen an die Motore an.

Die Zähler C zählen die mit den Winkelcodierern WK11...WK22 registrierten Winkelinkremente. Aus den vier Zählerständen ergeben sich - mit Kenntnis der Nullagen -die vier Raumwinkel der Laserstrahlen e1 und e2.

Der zentrale Regelprozessor µC führt die drei wesentlichen Funktionen, nämlich die Nachführregelung, die Meßwertbestimmung durch Triangulationsrechnung und das - nur beim Einrichten des Systems notwendige - Referenzieren aus.

Vorstehend ist die Erfindung anhand eines Ausführungsbeispiels ohne Beschränkung des allgemeinen Erfindungsgedankens beschrieben worden, innerhalb dessen selbstverständlich die verschiedensten Abwandlungen möglich sind:

Beispielsweise ist es möglich, für jeden Strahl t1 bzw. t2 mehr als einen positionsempfindlichen Sensor, beispielsweise zwei Sensoren vorzusehen, die einen unterschiedlichen Abstand vom Zentrum des Retroreflektors haben und mit einer - nicht näher dargestellten - zugeordneten Optik (Sammellinse) und einem Strahlteiler die Vermessung der Richtung und des Ortes des Auftreffpunktes der Strahlen t1 und t2 auch dann ermöglichen, wenn keine Nachstellung der Strahlen e1 und e2 auf das Zentrum des Retro-reflektors erfolgt.

## Patentansprüche

1. Verfahren zur Lagebestimmung eines Objektes (3), bei dem zur Bestimmung des Ortes des Objektes zwei Beleuchtungs-Lichtstrahlen (e1, e2) unter unterschiedlichen Richtungen auf zumindest einen an dem Objekt angebrachten Retroreflektor (R) gerichtet und die reflektierten Strahlen (r₁, r₂) mittels ortsempfindlicher Sensoren (PD) zur Ortsbestimmung des Objekts mittels Triangulation erfaßt werden,
dadurch **gekennzeichnet**, daß zur zusätzlichen Erfassung der Drehlage des Objektes (3) der Retroreflektor (R) teilverspiegelt ist, so daß ein Teil (t1, t2) der auf ihn auftreffenden Beleuchtungs-Lichtstrahlen durch ihn hindurchtritt, und daß die Laserstrahlen (t1, t2), die durch den Retroreflektor hindurchtreten, in einer Sensorebene (SE) bei bekanntem Abstand der Sensorebene vom Zentrum (Z) des Retroreflektors ortsabhängig erfaßt werden.

2. Vorrichtung zur Lagebestimmung eines Objektes (3) mit zwei Beleuchtungslichtquellen (L1, L2), die dazu dienen, unter unterschiedlichen Richtungen zwei Beleuchtungs-Lichtstrahlen (e1, e2) auf wenigstens einen an dem Objekt anzubringenden Retroreflektor (R) zu richten, und einer ortsempfindlichen Sensoreinheit (PD) für jeden von dem Retroreflektor (R) reflektierten Lichtstrahl (r1, r2), deren Signalausgang mit einer Auswerte- und Steuereinheit verbunden ist, die für die Signalauswertung mittels Triangulation ausgebildet ist,
dadurch gekennzeichnet, daß der Retroreflektor (R) teilverspiegelt ist, und daß wenigstens ein weiterer ortsempfindlicher am Objekt anzuordnender Sensor (SE) so in einer Sensorebene (SE) bei bekanntem Abstand der Sensorebene vom Zentrum (Z) des Retroreflektors angeordnet ist, daß die durch den Retroreflektor hindurchtretenden Lichtstrahlen (t1, t2) auf dem weiteren Sensor (SE) auftreffen und daß ein Signalausgang dieses weiteren Sensors (SE) mit der Auswerte- und Steuereinheit (µC) zur Bestimmung der Drehlage des Objektes verbunden ist.

3. Vorrichtung nach Anspruch 2,
dadurch **gekennzeichnet**, daß die Auswerte- und Steuereinheit (µC) zur derartigen Steuerung der Nachführung der Beleuchtungs-Lichtstrahlen (e1, e2) ausgebildet ist, daß diese immer im Zentrum (Z) des Retroreflektors (R) auftreffen,

4. Vorrichtung nach Anspruch 3,
dadurch **gekennzeichnet**, daß in Lichtweg jedes Beleuchtungs-Lichtstrahls (e1, e2) ein Spiegel (Sp) angeordnet ist, der zum Nachführen durch die Auswerte- und Steuereinheit (µC) um eine Drehachse drehbar ist, die mit dem auf dem Spiegel auftreffenden Beleuchtungs-Lichtstrahl (e1, e2) zusammenfällt, und um eine hierzu senkrechte Schwenkachse schwenkbar ist, die die Drehachse in Strahl-Auftreffpunkt schneidet.

5. Vorrichtung nach Anspruch 4,
dadurch **gekennzeichnet**, daß im Lichtweg zwischen den Spiegel (Sp) und der Beleuchtungs-Lichtquelle (L1, L2) ein Strahlteiler (ST) zum Richten des reflektierten Lichtstrahls (r1, r2) auf den ortsempfindlichen Sensor (PD) vorgesehen ist.

6. Vorrichtung nach Anspruch 5,
dadurch **gekennzeichnet**, daß der Strahlteiler (ST) und der Sensor (PD) gemeinsam mit dem Spiegel (Sp) um die Achse drehbar sind, die mit dem zugehörigen Beleuchtungs-Lichtstrahl (e1, e2), zwischen der Beleuchtungs-Lichtquelle (L1, L2) und dem Spiegel zusammenfällt.

7. Vorrichtung nach einem der Ansprüche 4 bis 6,
dadurch **gekennzeichnet**, daß Winkelgeber (WK11, WK12, WK21, WK22) zur Erfassung der Schwenkung und Drehung der Spiegel (Sp) in jedem Strahlengang vorgesehen sind, und daß die Auswerte- und Steuereinheit (µC) zur Bestimmung des Ortes des Objekts unter Heranziehung des Ausgangssignals der Winkelgeber ausgebildet ist.

8. Vorrichtung nach einem der Ansprüche 2 bis 7,
dadurch **gekennzeichnet**, daß die ortsempfindlichen Sensoren (PD; SE) positionsempfindliche Dioden oder CCD-Sensoren sind.

9. Vorrichtung nach einem der Ansprüche 2 bis 8,
dadurch **gekennzeichnet**, daß im Strahlengang der durch den Retroreflektor (R) hindurchtretenden Strahlen (t1,t2) wenigstens zwei ortsempfindliche Sensoren (SE) vorgesehen sind.

10. Vorrichtung nach Anspruch 8 oder 9,
dadurch **gekennzeichnet**, daß zwischen dem Retroreflektor (R) und der Sensorebene (SE) ein Linsensystem und/oder ein Strahlteiler angeordnet ist.

## Claims

1. A method for determining the attitude of an object (3) in which two illuminating light beams (e1, e2) are directed from different directions on to at least one retro-reflector (R) attached to the object for determining the position of the object and the reflected beams (r1, r2) are detected by means of sensors (PD) sensitive to position for the position determination by means of triangulation, characterized in that the retro-reflector (R) is partially silvered for detecting additionally the rotational attitude of the object (3), so that a portion (t1, t2) of the illuminating light beams incident thereon pass therethrough and in that the laser beams (t1, t2) which pass through the retro-reflector are detected in a manner sensitive to position in a sensing plane (SE) at a known distance of the sensing plane from the centre (Z) of the retro-reflector.

2. A device for determining the attitude of an object (3) with two illuminating light sources (L1, L2) which serve to direct two illuminating light beams (e1, e2) from different directions on to at least one retro-reflector (R) attached to the object, and a position-sensitive sensor unit (PD) for each of the light beams (r1, r2) reflected from the retro-reflector (R), the signal outputs of the sensor units being fed to a processing and control unit which is provided for signal processing by triangulation, characterized in that the retro-reflector (R) is partially silvered and in that at least one further position-sensitive sensor (SE) arranged on the object is so arranged in a sensor plane (SE) at a known distance from the centre (Z) of the retro-reflector that the light beams (t1, t2) passing through the retro-reflector impinge on the further sensor (SE) and in that a signal output of this further sensor (SE) is connected to the processing and control unit (µC) for determining the rotational attitude of the object.

3. A device according to claim 2, characterized in that the processing and control unit (µC) is constructed so to control the tracking of the illuminating light beams (e1, e2) that these always impinge at the centre (Z) of the retro-reflector (R).

4. A device according to claim 3, characterized in that a mirror (Sp) is arranged in the light path of each illuminating light beam (e1, e2) and is rotatable by the processing and control unit (µC) for the tracking about an axis of rotation which coincides with the illuminating light beam (e1, e2) incident on the mirror, and can be pivoted about a pivotal axis perpendicular thereto and which intersects the axis of rotation at the point of beam impingement.

5. A device according to claim 4, characterized in that a beam splitter (ST) is provided in the light path between the mirror (Sp) and the illuminating light source (L1, L2), for directing the reflected light beam (r1, r2) on to the position-sensitive sensor (PD).

6. A device according to claim 5, characterized in that the beam splitter (ST) and the sensor (PD) are rotatable together with the mirror (Sp) about the axis which coincides with the illuminating light beam (e1, e2) between the illuminating light source (L1, L2) and the mirror.

7. A device according to any of claims 4 to 6, characterized in that angle transducers (WK11, WK12, WK21, WK22) are provided for detecting the pivoting and rotation of the mirror (Sp) in each beam path, and in that the processing and control unit (µC) is constructed to determine the position of the object using the output signals of the angle transducers.

8. A device according to any of claims 2 to 7, characterized in that the position-sensitive sensors (PD; SE) are position-sensitive diodes or CCD sensors.

9. A device according to any of claims 2 to 8, characterized in that at least two position-sensitive sensors (SE) are provided in the beam path of the beams (t1, t2) passing through the retro-reflector (R).

10. A device according to claim 8 or 9, characterized in that a lens system and/or a beam splitter is arranged between the retro-reflector (R) and the sensor plane (SE).

## Revendications

1. Procédé pour déterminer la position d'un objet (3), selon lequel, afin de déterminer l'emplacement de l'objet, deux rayons lumineux d'éclairement (e1, e2) sont dirigés sur au moins un rétroréflecteur (R) installé sur l'objet et les rayons réfléchis (r1, r2) sont, afin de déterminer l'emplacement de l'objet par triangulation, détectés par des détecteurs de position (PD),
**caractérisé** en ce qu'afin de détecter en outre la position de rotation de l'objet (3), le rétroréflecteur (R) est partiellement métallisé, de sorte qu'une partie (t1, t2) des rayons lumineux d'éclairement incidents le traversent, et que les rayons lumineux (t1, t2) qui traversent le rétroréflecteur sont détectés dans un plan de détecteur de position (SE) se trouvant à une distance connue du centre (Z) du rétroréflecteur.

2. Dispositif pour déterminer la position d'un objet (3), avec deux sources lumineuses d'éclairement (L1, L2) qui servent à diriger des rayons lumineux d'éclairement respectifs (e1, e2) dans des directions différentes sur au moins un rétroréflecteur (R) à installer sur l'objet, et avec une unité de détection de position (PD) pour chacun des rayons lumineux (r1, r2) réfléchis par le rétroréflecteur (R), unité dont la sortie de signaux est reliée à une unité d'évaluation et de commande conçue pour évaluer les signaux par triangulation,
**caractérisé** en ce que le rétroréflecteur (R) est partiellement métallisé et en ce qu'au moins un détecteur de position supplémentaire (SE), à disposer sur l'objet, est disposé dans un plan de détecteur (SE) se trouvant à une distance connue du centre (Z) du rétroréflecteur, de sorte que les rayons lumineux (t1, t2) qui traversent le rétroréflecteur atteignent le détecteur supplémentaire (SE), et qu'une sortie de signaux de ce détecteur supplémentaire (SE) est reliée à l'unité d'évaluation et de commande (µC) afin de déterminer la position de rotation de l'objet.

3. Dispositif selon la revendication 2, **caractérisé** en ce que l'unité d'évaluation et de commande (µC) est conçue pour commander la poursuite des rayons lumineux d'éclairement (e1, e2) de façon qu'ils atteignent toujours le centre (Z) du rétroréflecteur (R).

4. Dispositif selon la revendication 3, **caractérisé** en ce qu'un miroir (Sp) est disposé dans le chemin optique de chaque rayon lumineux d'éclairement (e1, e2), miroir que l'unité d'évaluation et de commande (µC) peut faire tourner, aux fins de poursuite, autour d'un axe de rotation qui coïncide avec le rayon lumineux d'éclairement (e1, e2) atteignant le miroir, et qu'elle peut faire pivoter autour d'un axe de pivotement qui est perpendiculaire à l'axe de rotation et coupe ce dernier au point d'incidence du rayon.

5. Dispositif selon la revendication 4, **caractérisé** en ce qu'il est prévu, dans le chemin optique entre le miroir (Sp) et la source lumineuse d'éclairement (S1, S2), une lame séparatrice (ST) pour diriger le rayon lumineux réfléchi (r1, r2) sur le détecteur de position (PD).

6. Dispositif selon la revendication 5, **caractérisé** en ce que la lame séparatrice (ST) et le détecteur (PD) peuvent, conjointement avec le miroir (Sp), tourner autour de l'axe qui coïncide avec le rayon lumineux d'éclairement associé (e1, e2) entre la source lumineuse d'éclairement (L1, L2) et le miroir.

7. Dispositif selon l'une quelconque des revendications 4 à 6, **caractérisé** en ce que des capteurs angulaires (WK11, WK12, WK21, WK22) sont prévus dans chaque chemin optique pour détecter le pivotement et la rotation du miroir (Sp), et en ce que l'unité d'évaluation et de commande (µC) est conçue pour déterminer l'emplacement de l'objet en se servant du signal de sortie des capteurs angulaires.

8. Dispositif selon l'une quelconque des revendications 2 à 7, **caractérisé** en ce que les détecteurs de position (PD ; SE) sont des diodes de détection de position ou des capteurs CCD.

9. Dispositif selon l'une quelconque des revendications 2 à 8, **caractérisé** en ce qu'au moins deux détecteurs de position (SE) sont prévus dans le chemin optique des rayons (t1, t2) qui traversent le rétroréflecteur (R).

10. Dispositif selon la revendication 8 ou 9, **caractérisé** en ce qu'un système de lentilles et/ou une lame séparatrice est disposé(e) entre le rétroréflecteur (R) et le plan de détecteur (SE).
